# EUROPÄISCHE PATENTSCHRIFT

(11) **EP 1 853 639 B1**
(45) Veröffentlichungstag und Bekanntmachung des Hinweises auf die Patenterteilung: **22.07.2015**
(21) Anmeldenummer: 06708246.1
(22) Anmeldetag: 14.02.2006
(51) Int. Cl.: C08G 18/08, C08G 18/66, C09J 175/04

(54) **POLYURETHANDISPERSION FÜR DIE VERBUNDFOLIENKASCHIERUNG**
POLYURETHANE DISPERSION FOR COMPOSITE FILM LAMINATION
DISPERSION DE POLYURETHANE DESTINEE AU CONTRECOLLAGE DE PELLICULES COMPOSITES

(30) Priorität: 15.02.2005 DE 102005006984
(43) Veröffentlichungstag der Anmeldung: 14.11.2007
(73) Patentinhaber: BASF SE, 67056 Ludwigshafen (DE)
(72) Erfinder: BURGHARDT, Andre, 67240 Bobenheim-roxheim (DE); FRICKE, Hans-Joachim, 67246 Dirmstein (DE); HÄBERLE, Karl, 67346 Speyer (DE); HARTZ, Oliver, 67117 Limburgerhof (DE); SEIBERT, Horst, 67136 Fussgönheim (DE); SCHUMACHER, Karl-Heinz, 67433 Neustadt (DE)
(86) Internationale Anmeldenummer: PCT/EP2006/050909
(87) Internationale Veröffentlichungsnummer: WO 2006/087317

(56) Entgegenhaltungen:
- EP-A- 0 498 218
- WO-A-91/15529
- DE-A- 4 308 079
- DE-A- 19 842 636
- US-A- 4 096 127

## Beschreibung

Die Erfindung betrifft eine wässrige Dispersion, enthaltend ein Polyurethan, aufgebaut aus
a) organischen Diisocyanaten
b) Dihydroxyverbindungen mit einem Molgewicht von 500 bis 5000 g/mol, welche keine ionische oder in eine ionische Gruppe überführbare Gruppe enthalten
c) ein- bis dreiwertigen Alkoholen, welche zusätzlich eine ionische Gruppe enthalten
d) gegebenenfalls weiteren von a) bis c) verschiedenen Verbindungen,
dadurch gekennzeichnet, dass
das Polyurethan weniger als 0,6 Gew. % Harnstoffgruppen (berechnet mit einem Molgewicht von 56 g/Mol) enthält,
die ionische Gruppe von c) zumindest zum Teil mit einem Alkalikation neutralisiert ist und die Umsetzung der Verbindungen a), b), c) und d) nicht in Gegenwart eines Katalysators mit einer Metall-Kohlenstoffbindung erfolgt,
und wobei es sich bei b) um Polyetheralkohole handelt, die erhältlich sind durch Polymerisation von Propylenoxid.

Weiterhin betrifft die Erfindung die Verwendung der Dispersion als Kaschierklebstoff, insbesondere als einkomponentiger (1 K) Kaschierklebstoff. Bei 1 K-Kaschierklebstoffen wird im Gegensatz zu 2K Kaschierklebstoffen kein Vernetzer zugesetzt.

Kaschierklebstoffe werden z.B. zur Herstellung von Verbundfolie verwendet (Verbundfolienkaschierung).

Durch die Verklebung bzw. Kaschierung von Folien aus unterschiedlichen Werkstoffen werden Eigenschaften dieser Werkstoffe kombiniert. Ziel einer solchen Maßnahme kann es sein, besondere dekorative Effekte zu erreichen, oder technische Effekte wie Schutz eines Aufdrucks, Erzeugung kochfester Folienverbunde, Unterbindung der Dampfdiffusion, Heißsiegelbarkeit, zuverlässige Vermeidung der Porigkeit oder Beständigkeit gegen aggressive Güter zu bewirken. Die Folienwerkstoffe, die im wesentlichen eingesetzt werden, sind Polyethylen, Polypropylen, insbesondere biaxial gerecktes Polypropylen, Polyamid, Polyester, PVC, Celluloseacetat, Zellglas und Metalle wie Zinn oder Aluminium.

Besondere Anforderungen werden dabei an die Festigkeit der Folienverbunde gestellt. Aus EP-A 441 196 sind 1 K-Polyurethandispersionen bekannt. In DE-A 43 08 079 wird die Verwendung von 1 K-Polyurethandispersionen als Kaschierklebstoff beschrieben. Die mit den bisher beschriebenen 1 K-Polyurethandispersionen erreichte Festigkeit der Verbundfolien ist insbesondere bei Folienverbunden aus biaxial gerecktem Polypropylen (OPP) und Folienverbunden aus OPP-Folien und bedruckten Polyesterfolien noch nicht ausreichend.

Aufgabe der vorliegenden Erfindung waren daher Polyurethandispersionen, welche bei der Verwendung als Kaschierklebstoff eine höhere Festigkeit der Folienverbunde bewirken.

Demgemäß wurde die eingangs definierte Polyurethandispersion und ihre Verwendung gefunden.

Das Polyurethan ist aufgebaut aus
a) organischen Diisocyanaten
b) Dihydroxyverbindungen mit einem Molgewicht von 500 bis 5000 g/mol, welche keine ionische oder in eine ionische Gruppe überführbare Gruppe enthalten
c) ein- bis dreiwertigen Alkoholen, welche zusätzlich eine ionische Gruppe enthalten und
d) gegebenenfalls weiteren von a) bis c) verschiedenen Verbindungen.
wobei es sich bei b) um Polyetheralkohole handelt, die erhältlich sind durch Polymerisation von Propylenoxid.

Als Diisocyanate a) zu nennen sind insbesondere Diisocyanate X(NCO)₂, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propän, Trimethylhexandüsocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanatodiphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Bei den Dihydroxyverbindungen b) handelt es sich um Polyetherdiole.

Die Polyetherdiole sind insbesondere durch Polymerisation von Propylenoxid mit sich selbst, z. B. in Gegenwart von BF₃ oder durch Anlagerung dieser Verbindungen an Startkomponenten mit reaktionsfähigen Wasserstoffatomen, wie Alkohole oder Amine, z. B. Wasser, Ethylenglykol, Propan-1,2-diol, Propan-1,3-diol, 2,2-Bis(4-hydroxyphenyl)-propan oder Anilin erhältlich.

Insbesondere handelt es sich bei mindestens 50 Gew.-%, besonders bevorzugt mindestens 85 Gew.-% ganz besonders bevorzugt mindestens 95 Gew.-% bzw. bei 100 Gew.-% der Verbindungen b) um Polyetherole. Das Molekulargewicht der Verbindungen b) beträgt vorzugsweise 1000 bis 3000 g/Mol. Es handelt sich um das zahlenmittlere Molekulargewicht, bestimmt durch die Zahl der Endgruppen (OH-Zahl).

Die ein- bis dreiwertigen Alkohole c) enthalten insbesondere anionische Gruppen wie die Sulfonat-, die Carboxylat- und die Phosphatgruppe. Der Begriff ionische Gruppe soll solche Gruppen mitumfassen, die in ionische Gruppen überführt werden können. Entsprechend werden auch Carbonsäure-, Sulfonsäure- oder Phosphorsäuregruppen als ionische Gruppen aufgefasst.

In Betracht kommen üblicherweise aliphatische, cycloaliphatische, araliphatische oder aromatische Carbonsäuren und Sulfonsäuren, die mindestens eine alkoholische Hydroxylgruppe tragen. Bevorzugt sind Dihydroxycarbonsäuren, insbesondere Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel (C₁) 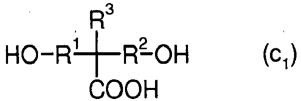 in welcher R¹ und R² für eine C₁- bis C₄-Alkandiyl-(Einheit) und R³ für eine C₁- bis C₄-Alkyl-(Einheit) steht und vor allem Dimethylolpropionsäure (DMPA) bevorzugt.

Neben Verbindungen a), b) und c) kommen weitere Verbindungen d) als Aufbaukomponenten des Polyurethans in Betracht:

Genannt seien z.B. Isocyanatverbindungen mit mehr als zwei Isocanatgruppen, wie z.B. durch Biuret- oder Isocyanuratbildung aus den obigen Diisocyanaten erhältlich sind.

Genannt seien weiterhin Verbindungen mit einem Molgewicht kleiner 500 g/mol, welche mindestens zwei mit Isocyanat reaktive Gruppen, insbesondere Hydroxylgruppen enthalten. Derartige Verbindungen dienen vorzugsweise zur Kettenverlängerung oder Vernetzung.

In Betracht kommen z. B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydröxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Po-Iyethylenglykol, Dipropylenglykol, Polypropylenglykol, Dibutylenglykol und Polybutylenglykole. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Genannt seien auch Verbindungen d) mit nur einer Isocyanatgruppe oder einer gegenüber Isocyanat reaktiven Gruppe, insbesondere Monoalkohole. Derartige Verbindungen werden üblicherweise zur Regulierung des Molekulargewichts eingesetzt.

Vorzugsweise besteht das Polyurethan zu mindestens 50 Gew.-%, besonders bevorzugt zu mindestens 80 Gew.-% ganz besonders bevorzugt zu mindestens 90 Gew.-% aus Verbindungen a) und b).

Der Anteil der Komponenten c) an der Gesamtmenge der Komponenten (a), (b), (c), (d) wird im allgemeinen so bemessen, dass die Molmenge der ionischen Gruppen, bezogen auf die Gewichtsmenge aller Monomere (a) bis (d), 30 bis 1000, bevorzugt 50 bis 800 und besonders bevorzugt 80 bis 600 mmol/kg Polyurethan beträgt.

Der Gehalt an Verbindungen d) ist vorzugsweise kleiner 10 Gew.-%, besonders bevorzugt kleiner 5 bzw. 2 Gew.-%, ganz besonders bevorzugt kleiner 1 Gew.-%. In einer besonders bevorzugten Ausführungsform besteht das Polyurethan ausschließlich aus a), b) und c).

Wesentliche Merkmale des erfindungsgemäßen Polyurethans ist, dass
- der Gehalt an Harnstoffgruppen (Molgewicht 56 g/mol) 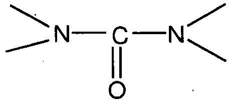 kleiner als 0,6 Gew.-%, bezogen auf das Gesamtgewicht des Polyurethans ist,
- die ionische Gruppe von c) zumindestens zum Teil mit Alkalikationen neutralisiert ist und
- die Umsetzung der Verbindungen a), b), c) und d) nicht in Gegenwart eines Katalysators mit Metall-Kohlenstoffbindungen erfolgt.

Der Gehalt an Harnstoffgruppen ist vorzugsweise kleiner 0,5, besonders bevorzugt kleiner 0,4 Gew.-%.

Harnstoffgruppen entstehen bei Umsetzung von Isocyanatgruppen mit Aminogruppen. Verbindungen d) mit Aminogruppen werden daher, wenn überhaupt, nur in untergeordneten Mengen eingesetzt.

Ganz besonders bevorzugt ist das Polyurethan weitgehend frei von Harnstoffgruppen.

Die ionischen Gruppen von c) sind vorzugsweise zu mindestens 20 Mol-%, besonders bevorzugt zu mindestens 30 Mol-%, ganz besonders bevorzugt zu mindestens 50 Mol-% mit einem Alkalikation neutralisiert, d.h. sie liegen als Salz des entsprechenden Al-kalikations vor. Insbesondere sind 20 bis 80 Mol-%, besonders bevorzugt 30 bis 70 Mol-% der ionischen Gruppen c) mit einem Alkalikation neutralisiert. Zur Neutralisierung können Alkalihydroxide, Alkalicarbonate und Alkalihydrogencarbonate verwendet werden. Bevorzugt sind Alkalihydroxide. Als Alkalihydroxide seien insbesondere NaOH und KOH genannt. Besonders bevorzugt ist NaOH.

Metall-organische Verbindungen (d.h. Verbindungen mit einer Metall-Kohlenstoffbindung), insbesondere Zinn-organische Verbindungen wie Dibutylzinndilaurat werden oft als Katalysatoren bei der Umsetzung von Isocyanat mit Hydroxylgruppen verwendet.

Im Rahmen der vorliegenden Erfindung wird auf derartige Katalysatoren mit einer Metall-Kohlenstoffbindung bei der Umsetzung verzichtet.

Insbesondere werden keine Verbindungen, die Metallatome, sei es in kovalent gebundener Form oder in ionischer Form, enthalten, als Katalysatoren eingesetzt. Bevorzugt werden weder metallhaltige Katalysatoren noch andere Katalysatoren bei der Umsetzung von Isocyanat-Verbindungen mit Hydroxylgruppen enthaltenden Verbindungen verwendet.

Normalerweise werden die Komponenten (a) bis (d) sowie ihre jeweiligen Molmengen so gewählt, dass das Verhältnis A : B mit

| | |
|---|---|
| A | der Molmenge an Isocyanatgruppen und |
| B | der Summe aus der Molmenge der Hydroxylgruppen und der Molmenge der funktionellen Gruppen, die mit Isocyanaten in einer Additionsreaktion reagieren können |

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (d) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (d) zur Herstellung des Polyurethans erfolgt vorzugsweise bei Reaktionstemperaturen von bis zu 180°C, bevorzugt bis zu 150°C unter Normaldruck oder unter autogenem Druck.

Die Herstellung von Polyurethanen, bzw. von wässrigen Polyurethandispersionen ist dem Fachmann bekannt.

Die erhaltenen wässrigen Polyurethandispersionen haben im allgemeinen einen Feststoffgehalt von 10 bis 70, vorzugsweise von 15 bis 50 Gew.-%.

Die Polyurethane weisen in N,N-Dimethylformamid (DMF, 21°C) in der Regel einen K-Wert von 20 bis 80 auf.

Der K-Wert ist eine relative Viskositätszahl, die in Analogie zur DIN 53 726 bei 25° bestimmt wird. Er enthält die Fließgeschwindigkeit einer 1 gew.-%igen Lösung des Polyurethans in DMF, relativ zur Fließgeschwindigkeit von reinem DMF und charakterisiert das mittlere Molekulargewicht des Polyurethans.

Die Polyurethandispersionen können ohne weitere Zusätze als Klebstoff oder Dichtungsmasse verwendet werden.

Die erfindungsgemäßen Klebstoffe oder Dichtungsmassen enthalten die Polyurethandispersionen und gegebenenfalls weitere Bestandteile. Bei den Klebstoffen kann es sich um Haftklebstoff, Kontaktklebstoffe (beidseitiger Kleberauftrag), Schaumklebstoffe (Klebstoff enthält Schäumungsmittel) oder Kaschierklebstoffe, z. B. auch für Automobilinnenteile, handeln.

Als zu verklebende Substrate kommen z. B. solche aus Holz, Metall, Kunststoff, Papier in Betracht.

Als weitere Bestandteile zu benennen sind beispielsweise Verdickungsmittel, Weichmacher oder auch klebrigmachende Harze wie z.B. Naturharze oder modifizierte Harze wie Kolophoniumester oder synthetische Harze wie Phthalatharze. Vorzugsweise enthalten die Klebstoffe keine Verbindungen, welche mit dem Polyurethan unter Vernetzung reagieren. Die erfindungsgemäßen Polyurethandispersionen werden entsprechend vorzugsweise als einkomponentige (1 K) Klebstoffe, insbesondere 1 K-Kaschierklebstoffe verwendet.

Bei der Verwendung als Kaschierklebstoff werden im allgemeinen flächige Substrate, z. B. Folien mit Papier oder Karton verklebt. Besonders eignen sich die Polyurethandispersionen als Klebstoff zur Herstellung von Verbundfolien, wobei, wie bereits eingangs beschrieben, unterschiedliche Folien zu verschiedenen Zwecken miteinander verklebt werden.

Die Folienwerkstoffe, die im wesentlichen eingesetzt werden, sind Polyethylen, Polypropylen, insbesondere biaxial gerecktes Polypropylen (OPP), Polyamid, Polyester, PVC, Celluloseacetat, Zellglas und Metalle wie Zinn und Aluminium, insbesondere auch metallisierte Polymerfolien, z. B. metallisierte Polyolefinfolien oder Polyesterfolien.

Die Polymerfolien, insbesondere Polyolefinfolien, können gegebenenfalls coronavorbehandelt sein. Der Kaschierklebstoff wird auf mindestens eines im allgemeinen nur auf eines der zu verklebenden Substrate aufgetragen. Die beschichteten Substrate werden im allgemeinen kurz getrocknet und dann vorzugsweise bei einer Temperatur von 30 bis 80°C miteinander bzw. mit unbeschichteten Substraten verpresst.

Die erhaltene Verklebung, insbesondere der erhaltene Folienverbund hat bei Raumtemperatur eine hohe Verbundfestigkeit, wie sonst im allgemeinen nur bei zweikomponentigen Systemen unter Verwendung eines Vernetzers zu erreichen ist.

Eine besonders hohe Festigkeit wird bei der Verklebung von Polyolefinfolien, insbesondere auch bedruckten Polyolefinfolien, z.B. OPP-Folien miteinander oder bei der Verklebung von derartiger Polyolefinfolien, mit metallisierten Polyesterfolien erreicht.

Vorzugsweise ist zumindest eine der Polyolefinfolien bedruckt.

Bei hohen Temperaturen, ca. ab 60°C wird die Verbundfestigkeit geringer. Ab ca. 100°C, z. B. in kochendem Wasser, lassen sich die Verbunde im allgemeinen wieder gut trennen. Auf diese Weise wird ein getrenntes Recycling der unterschiedlichen Folien im Verbund ermöglicht.

### Beispiele

### Beispiel 1: Synthese einer erfindungsgemäßen Polyurethan-Dispersion

Eine Mischung aus 174,2 g (1,00 mol) Diisocyanatotoluol (80% 2,4-Isomer, 20% 2,6-Isomer), 800 g (0,40 mol) Polypropylenglykol der OH-Zahl 56, 80,3 g (0,60 mol) Dimethylolpropionsäure und 100 g Aceton wurde fünf Stunden bei 95°C umgesetzt. Anschließend wurde auf 30°C abgekühlt und der Gehalt an nicht umgesetzten NCO-Gruppen zu 0,06 Gew.% bestimmt. Danach wurde mit 800 g Aceton verdünnt und dann nacheinander eine Lösung von 9,6 g (0,24 mol) Natriumhydroxid in 90 g Wasser und 1500 g Wasser eingerührt. Nach Destillation des Acetons wurde eine ca. 40 gew.-%ige wässrige Polyurethan-Dispersion erhalten.

### Vergleichsbeispiel 1: Synthese einer Polyurethan-Dispersion nach der DE-A 1 4 308 079

Eine Mischung aus 174,2 g (1,00 mol) Diisocyanatotoluol (80% 2,4-Isomer, 20% 2,6-Isomer), 800 g (0,40 mol) Polypropylenglykol der OH-Zahl 56, 80,3 g (0,60 mol) Dimethylolpropionsäure, 0,4 g Dibutylzinndilaurat und 100 g Aceton wurde fünf Stunden bei 95°C umgesetzt. Anschließend wurde auf 30°C abgekühlt und der Gehalt an nicht umgesetzten NCO-Gruppen zu 0,07 Gew.% bestimmt. Danach wurde mit 800 g Aceton verdünnt und dann nacheinander 24,2 g (0,24 mol) Triethylamin und 1500 g Wasser eingerührt. Nach Destillation des Acetons wurde eine ca. 40 gew.-%ige wässrige Polyurethan-Dispersion erhalten.

### Herstellung von Verbundfolien

Auf eine coronavorbehandelte Folie aus bedrucktem biaxial gerecktem Polypropylen (OPP) wurde die Polyurethandispersion in einer Menge von 4 g/m² mit einem 0,2 mm Rollrakel aufgetragen. Die beschichteten Folien wurden mit einem Heißluftgebläse ca. 2 Minuten getrocknet und in einer Rollenpresse bei 70°C und 6,5 bar mit einer Geschwindigkeit von 5 m/min mit einer metallisierten Polyesterfolie verpresst.

Nach verschiedenen Lagerzeiten bei Raumtemperatur wurde die Schälfestigkeit in N/cm des Folienverbundes mit einer Zugprüfmaschine bestimmt:
Folienverbund bedrucktes oPP/metallisierte Polyesterfolie

| Lagerzeit | sofort | 24 Stunden | 7 Tage |
|---|---|---|---|
| Beispiel | 0,82 | 1,60 | 1,87 |
| Vergleich | 0,79 | 1,10 | 1,23 |

## Patentansprüche

1. Wässrige Dispersion, enthaltend ein Polyurethan, aufgebaut aus
a) organischen Diisocyanaten
b) Dihydroxyverbindungen mit einem Molgewicht von 500 bis 5000 g/mol, welche keine ionische oder in eine ionische Gruppe überführbare Gruppe enthalten
c) ein- bis dreiwertigen Alkoholen, welche zusätzlich eine ionische Gruppe enthalten
d) gegebenenfalls weiteren von a) bis c) verschiedenen Verbindungen,
**dadurch gekennzeichnet, dass**
das Polyurethan weniger als 0,6 Gew. % Harnstoffgruppen (berechnet mit einem Molgewicht von 56 g/Mol) enthält,
die ionische Gruppe von c) zumindest zum Teil mit einem Alkalikation neutralisiert ist und
die Umsetzung der Verbindungen a), b), c) und d) nicht in Gegenwart eines Katalysators mit einer Metall-Kohlenstoffbindung erfolgt und wobei
es sich bei b) um Polyetheralkohole handelt, die erhältlich sind durch Polymerisation von Propylenoxid.

2. Wässrige Dispersion gemäß Anspruch 1, **dadurch gekennzeichnet, dass** es sich bei c) um Dihydroxycarbonsäuren handelt.

3. Wässrige Dispersion gemäß einem der Ansprüche 1 bis 2, **dadurch gekennzeichnet, dass** die Dispersion keine Verbindung mit einer Metall-Kohlenstöffbindung enthält.

4. Wässrige Dispersion gemäß einem der Ansprüche 1 bis 3, **dadurch gekennzeichnet, dass** die Dispersion keine Vernetzer enthält.

5. Verwendung der Dispersion gemäß einem der Ansprüche 1 bis 4 als Bestandteile von Klebstoffen, insbesondere Kaschierklebstoffen.

6. Verwendung der Dispersion gemäß einem der Ansprüche 1 bis 4 als Bestandteil von einkomponentigen (1K) - Klebstoffen, insbesondere 1K - Kaschierklebstoffen.

7. Verwendung der Dispersion gemäß einem der Ansprüche 1 bis 4 für die Verbundfolienkaschierung.

8. Verwendung der Dispersion gemäß einem der Ansprüche 1 bis 4 für die Verklebung von Polyolefinfolien miteinander oder von Polyolefinfolien mit metallisierten Polyesterfolien, wobei zumindest eine der Folien bedruckt ist

## Claims

1. An aqueous dispersion comprising a polyurethane synthesized from
a) organic diisocyanates
b) dihydroxy compounds having a molar weight of 500 to 5000 g/mol and comprising no ionic group or group that can be converted to an ionic group
c) mono- to trihydric alcohols additionally comprising an ionic group
d) if appropriate, further compounds other than a) to c),
wherein
the polyurethane comprises less than 0.6% by weight of urea groups (calculated with a molar weight of 56 g/mol),
the ionic group of c) has been at least partly neutralized with an alkali metal cation, and
the reaction of compounds a), b), c), and d) does not take place in the presence of a catalyst containing a metal-carbon bond, and wherein
compounds b) are polyether alcohols that are obtainable by polymerizing propylene oxide.

2. The aqueous dispersion according to claim 1, wherein compounds c) are dihydroxy carboxylic acids.

3. The aqueous dispersion according to any one of claims 1 to 2, comprising no compound containing a metal-carbon bond.

4. The aqueous dispersion according to any one of claims 1 to 3, comprising no crosslinkers.

5. The use of a dispersion according to any one of claims 1 to 4 as a constituent of an adhesive, particularly a laminating adhesive.

6. The use of a dispersion according to any one of claims 1 to 4 as a constituent of a one-component (1K) adhesive, particularly a 1K laminating adhesive.

7. The use of a dispersion according to any one of claims 1 to 4 for composite-film lamination.

8. The use of a dispersion according to any one of claims 1 to 4 for bonding polyolefin films to one another or to metallized polyester films, at least one of the films carrying print.

## Revendications

1. Dispersion aqueuse contenant un polyuréthane formé à partir de :
a) des diisocyanates organiques,
b) des composés dihydroxy d'un poids moléculaire de 500 à 5 000 g/mol, qui ne contiennent pas de groupe ionique ou transformable en un groupe ionique,
c) des alcools mono- à trivalents, qui contiennent en outre un groupe ionique,
d) éventuellement d'autres composés différents de a) à c),
**caractérisée en ce que**
le polyuréthane contient moins de 0,6 % en poids de groupes urée (calculé avec un poids moléculaire de 56 g/mol),
le groupe ionique de c) est neutralisé au moins en partie avec un cation alcalin et
la réaction des composés a), b), c) et d) n'a pas lieu en présence d'un catalyseur à liaison métal-carbone et où
b) consiste en des polyéther-alcools qui peuvent être obtenus par polymérisation d'oxyde de propylène.

2. Dispersion aqueuse selon la revendication 1, **caractérisée en ce que** c) consiste en des acides dihydroxycarboxyliques.

3. Dispersion aqueuse selon l'une quelconque des revendications 1 à 2, **caractérisée en ce que** la dispersion ne contient pas de composé à liaison métalcarbone.

4. Dispersion aqueuse selon l'une quelconque des revendications 1 à 3, **caractérisée en ce que** la dispersion ne contient pas d'agent de réticulation.

5. Utilisation de la dispersion selon l'une quelconque des revendications 1 à 4 en tant que constituant d'adhésifs, notamment d'adhésifs de contre-collage.

6. Utilisation de la dispersion selon l'une quelconque des revendications 1 à 4 en tant que constituant d'adhésifs monocomposants (1K), notamment d'adhésifs de contre-collage 1K.

7. Utilisation de la dispersion selon l'une quelconque des revendications 1 à 4 pour le contre-collage de films composites.

8. Utilisation de la dispersion selon l'une quelconque des revendications 1 à 4 pour le collage de films de polyoléfine les uns avec les autres ou de films de polyoléfine avec des films de polyester métallisés, au moins un des films étant imprimé.
